# EUROPÄISCHE PATENTSCHRIFT

(11) **EP 0 618 054 B1**
(45) Veröffentlichungstag und Bekanntmachung des Hinweises auf die Patenterteilung: **09.07.1997**
(21) Anmeldenummer: 94103987.7
(22) Anmeldetag: 15.03.1994
(51) Int. Cl.: B29B 7/74

(54) **Verfahren zur Herstellung Kautschukmischungen**
Process for manufacturing rubber blends
Procédé de réalisation de mélanges de caoutchoucs

(30) Priorität: 30.03.1993 DE 4314706
(43) Veröffentlichungstag der Anmeldung: 05.10.1994
(73) Patentinhaber: Continental Aktiengesellschaft, 30165 Hannover (DE); Peter, Julius, Dr., 1130 Wien (AT)
(72) Erfinder: Peter, Julius, Dr., A-1130 Wien (AT)
(74) Vertreter: Depmeyer, Lothar

(56) Entgegenhaltungen:
- EP-A- 0 277 558
- EP-A- 0 444 477
- EP-A- 0 472 931
- EP-A- 0 532 855
- DE-A- 4 127 211

## Beschreibung

Die Erfindung betrifft ein Verfahren zur Herstellung von Kautschukmischungen, bei dem in einer ersten Stufe in einem Stempelkneter aus Kautschuk und nicht reaktiven Zusatzstoffen eine Grundmischung hergestellt und dann in einer zweiten Stufe unter Hinzufügung von reaktiven Zusatzstoffen zu der Grundmischung eine Fertigmischung erstellt wird, wobei zumindest die erste Stufe chargenweise betrieben wird.

Bei einem bekannten derartigen Verfahren wird die Fertigmischung in einem stempellosen Kneter erstellt, der unterhalb des Stempelkneters angeordnet ist, wobei die Grundmischung vom Stempelkneter über einen senkrecht verlaufenden Kanal in den stempellosen Kneter überführt wird (EP-A-0 472 931). Beim Fertigmischen entstehende Dämpfe können dabei über Absaugöffnungen entfernt werden.

Für derartige Verfahren haben sich Stempelkneter zwar in modernen Mischbetrieben als vorteilhaft ergeben, es treten dabei aber doch nicht unerhebliche Nachteile in Erscheinung.

Kautschukmischungen enthalten in der Regel leicht flüchtige Bestandteile, die bei Prozessen in geschlossenen Systemen nicht entweichen können, wie dies bei Stempelknetern der Fall ist. Bei der Weiterverarbeitung bei hohen Temperaturen z.B. auf dem Walzwerk, einer Spritzmaschine auf dem Kalander oder im Falle einer Untervulkanisation zeigen die flüchtigen Bestandteile die Tendenz zum Entweichen. Dies macht sich in störenden Dämpfen und/oder in einer Porosität der Halbfabrikate oder der Fertigvulkanisate bemerkbar.

Der Erfindung liegt die Aufgabe zugrunde, die eingangs erwähnten Verfahren so zu verbessern, daß trotz Nutzung eines geschlossenen Systems in Form eines Stempelkneters Porositäten und störende Dämpfe zumindest weitgehend ausgeschaltet werden.

Zur Lösung dieser Aufgabe wird erfindungsgemäß die in der ersten Stufe in einem Stempelkneter erstellte Grundmischung zur Feinverteilung der nicht reaktiven Zusatzstoffe im Kautschuk in einen stempellosen Kneter überführt und dort fertiggemischt, worauf die Grundmischung der zweiten Stufe zugeführt wird.

Eine solche Verbindung eines Stempelkneters mit einem stempellosen Kneter zur Herstellung der Grundmischung bringt erhebliche Vorteile mit sich.

Die Feinverteilung der nicht reaktiven Zusatzstoffe in einem vorteilhaften Innenmischer mit einem offenen System ermöglicht die Absaugung der flüchtigen Bestandteile ohne Mehraufwand, unter Anwendung eines Vakuums sogar ganz zu entfernen. Dieser Vorteil ist insb. aus Arbeitshygienischen Gründen von Bedeutung.

Aufgrund der Vereinigung der erwähnten Kneter bei der Grundmischungsherstellung wird auch der Gesamtprozeß abgekürzt und intensiviert. Da im Regelfalle nach etwa zwei Drittel der Mischzeit die nicht reaktiven Zusatzstoffen von den Elastomeren aufgenommen sind, kann innerhalb des stempellosen Kneters die Feinverteilung der nicht reaktiven Zusatzstoffe parallell zur Herstellung der nächsten Charge Grundmischung im Stempelkneter vorgenommen werden. Dabei wird nicht nur Zeit gewonnen, vielmehr werden auch durch Temperaturabsenkung eine höhere Energieaufnahme und damit ein intensiverer Mischeffekt erreicht.

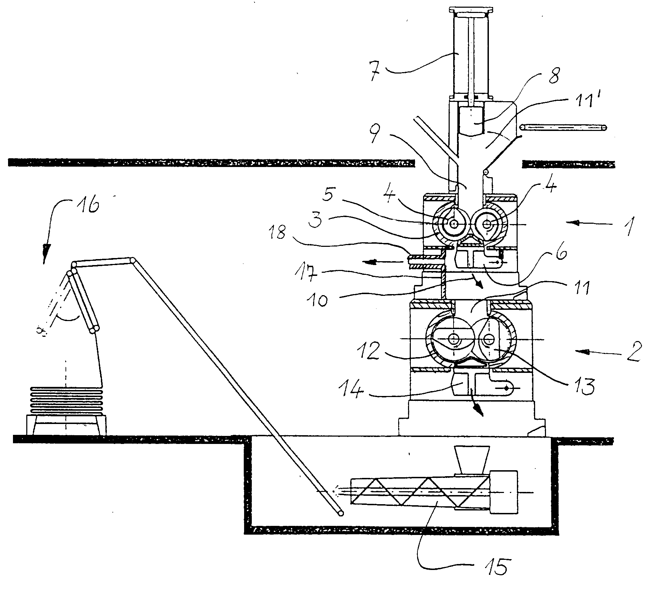

Weiter Einzelheiten der Erfindung werden anhand der Zeichnung erläutert, in der zum Verdeutlichen der Erfindung eine zum Durchführen des Verfahrens geeignete Vorrichtung dargestellt ist.

Die Abbildung zeigt eine Vorrichtung zum Grundmischen von Kautschuk im senkrechten Schnitt.

Die Vorrichtung zum Durchführen des erfindungsgemäßen Verfahrens hat ein Oberteil 1 und ein Unterteil 2.

Das Oberteil 1 wird im wesentlichen von einem Stempelkneter 3 gebildet mit zwei Rotoren 4, der sie aufnehmenden Mischkammer 5, einem nach unten klappbaren Sattel 6 und dem durch einen Arbeitszylinder 7 bewegbaren Stempel 8 zum Verschliessen der Einfüllöffnung 9 für die Mischkammer 5. In bekannter Weise kann der Sattel 6 um eine waagerechte Achse von der Schliesstellung gemäss Zeichnung im Sinne des Pfeiles 10 nach unten geklappt werden, in der er eine etwa senkrechte Stellung einnimmt. In dieser Stellung gibt der Sattel 6 die Austrittsöffnung der Mischkammer 5 frei. Im Bereich des Stempels 8 befinden sich die Einfüllöffnungen bzw. Trichter 11' für den Kautschuk und die nicht reaktiven Zusatzstoffe bzw. Öle, Chemikalien und Füllstoffe.

Die Austrittsöffnung der Mischkammer 5 befindet sich senkrecht oberhalb des Schlundes 11 einer Mischkammer 12 des das Unterteil der Vorrichtung bildenden stempellosen Kneters, dessen Rotoren mit 13 bezeichnet sind. Dem Schlund 11 ist also kein Verschlusselement zugeordnet. Die Austrittsöffnung des stempellosen Kneters ist durch einen Sattel 14 verschlossen. Durch Abklappen dieses Sattels nach unten wird die Austrittsöffnung der Mischkammer 12 frei.

Senkrecht unterhalb dieser Austrittsöffnung befindet ein Extruder 15, das von ihm geformte Band wird auf der Anlage 16 abgelegt.

Wichtig ist noch, dass die Fallstrecke des in der Mischkammer 5 bearbeiteten Kautschuks bis zum Eintritt in den Schlund 11 seitlich kanalartig abgeschlossen ist. Eine Kanalwand mit senkrechtem Verlauf ist bei 17 dargestellt. Um eine Absaugung des von dem Kanal umschlossenen Raumes zu erleichtern, ist eine Absaugleitung 18 vorgesehen.

Wie aus der Zeichnung erkennbar ist, ist der stempellose Kneter des Unterteils 2 im Vergleich zum Stempelkneter im Oberteil 1 wesentlich grösser. So ist seine Mischkammer 12 um etwa 30 - 70 % grösser, jedoch ist Seine Betriebsdrehzahl wesentlich kleiner. Aus diesen Gründen bewirkt der stempellose Kneter auch eine Abkühlung der Grundmischung, wenn sie vom Stempelkneter in den stempellosen Kneter überführt wird.

Ist im Stempelkneter eine Charge Kautschuk mit den nicht reaktiven Zusatzstoffen vermischt worden, wird der Sattel 6 geklappt. Damit gelangt der Inhalt der Mischkammer 5 über den zwischen den beiden Knetern befindlichen Kanal in den Schlund 11 und dann in die Mischkammer 12. Hier erfolgt eine Temperaturabsenkung und eine Feinverteilung der Zuatzstoffe, während gleichzeitig im Stempelkneter eine neue Charge bearbeitet wird.

Die bei der Mischung im Stempelkneter entweichenden flüchtigen Bestandteile können infolge des oberhalb des Schlundes 11 befindlichen Kanals und des dadurch gebildeten praktisch geschlossenen Raumes nicht beliebig entweichen; vielmehr werden diese Bestandteile über die Absaugleitung entfernt. Es erfolgt somit eine sog. on-line-Entgasung.

Nach Beendigung des Zyklus im stempellosen Kneter wird dieser durch Öffnen des Sattels 14 entleert, womit auch die nachgeschaltete Maschine ( Extruder 15 ) unmittelbar beschickt wird. Zu gleicher Zeit wird die im Stempelkneter bearbeitete Charge aus dem Stempelkneter unmittelbar in den stempellosen Kneter überführt, während der Stempelkneter neu mit Kautschuk und den nicht reaktiven Stoffen beschickt wird.

Die so fertiggestellte Grundmischung wird auf dem Wege über den Extruder 15 od. dgl. sofort oder nach einer Zwischenlagerung in einem nachgeschalteten Aggregat zu einer Fertigmischung verarbeitet, die sich durch die Hinzufügung reaktiver Zusatzstoffe auszeichnet.

Da der stempellose Kneter - wie erwähnt - wesentlich grösser bemessen ist als der vorgeschaltete Stempelkneter und zudem auch mit geringerer Drehzahl betrieben wird, wird die Grundmischung auch innerhalb des stempellosen Kneters abgekühlt, wodurch der Mischeffekt verbessert und die Energieaufnahme gesteigert werden.

## Patentansprüche

1. Verfahren zur Herstellung von Kautschukmischungen, bei dem in einer ersten Stufe in einem Stempelkneter aus Kautschuk und nicht reaktiven Zusatzstoffen eine Grundmischung hergestellt und dann in einer zweiten Stufe unter Hinzufügung von reaktiven Zusatzstoffen zu der Grundmischung eine Fertigmischung erstellt wird, wobei zumindest die erste Stufe chargenweise betrieben wird, dadurch gekennzeichnet, daß die in der ersten Stufe in einem Stempelkneter erstellte Grundmischung zur Feinverteilung der nicht reaktiven Zusatzstoffe im Kautschuk in einen stempellosen Kneter überführt und dort fertiggemischt wird, worauf die Grundmischung der zweiten Stufe zugeführt wird.

2. Verfahren nach Anspruch 1, dadurch gekennzeichnet, daß die Grundmischung im stempellosen Kneter abgekühlt wird.

## Claims

1. Method of producing rubber mixtures, wherein a master batch is produced from rubber and non-reactive additional substances in a first stage in a ram-type masticator, and then a final mixture is produced in a second stage by adding reactive additional substances to the master batch, at least the first stage being operated chargewisely, characterised in that the master batch, produced in the first stage in a ram-type masticator, is transferred to a ramless masticator for finely distributing the non-reactive additional substances in the rubber and finally mixed there, whereupon the master batch is supplied to the second stage.

2. Method according to claim 1, characterised in that the master batch is cooled in the ramless masticator.

## Revendications

1. Procédé de préparation de mélanges à base de caoutchouc, procédé dans lequel, dans un premier stade, on prépare dans un malaxeur à piston un mélange de base à partir de caoutchouc et d'additifs non réactifs, puis on élabore, dans un deuxième stade, un mélange final en ajoutant au mélange de base des additifs réactifs, au moins le premier stade s'effectuant charge par charge, caractérisé en ce qu'en vue de répartir finement les additifs non réactifs dans le caoutchouc, on transfère le mélange de base, préparé au premier stade dans un malaxeur à piston, dans un malaxeur sans piston, dans lequel on achève le mélange, le mélange de base étant ensuite envoyé au deuxième stade.

2. Procédé selon la revendication 1, caractérisé en ce qu'on refroidit le mélange de base dans le malaxeur sans piston.
